# EUROPEAN PATENT APPLICATION

(11) **EP 2 617 633 A2**
(43) Date of publication of application: **24.07.2013**
(21) Application number: 13151476.2
(22) Date of filing: 16.01.2013
(51) Int. Cl.: B62J 7/08, B62J 11/00, B62J 7/00

(54) **Carrying device for a vehicle**

(30) Priority: 18.01.2012 TW 101201178
(71) Applicant: Kwang Yang Motor Co., Ltd., Kaohsiung City 807 (TW)
(72) Inventor: Lin, Chuang-Hsiung, 830 Kaohsiung City (TW)
(74) Representative: Midgley, Jonathan Lee

(57) **Abstract**

A carrying device for a vehicle includes a supporting frame (2) detachably mounted to the vehicle, an accessory (4) optionally disposed on the supporting frame (2), and a plurality of fastening units (3) detachably connected to the supporting frame (2) for fastening the accessory (4) to the supporting frame (2) when the accessory (4) is disposed on the supporting frame (2).

## Description

The invention relates to a carrying device, and more particularly to a carrying device for a vehicle.

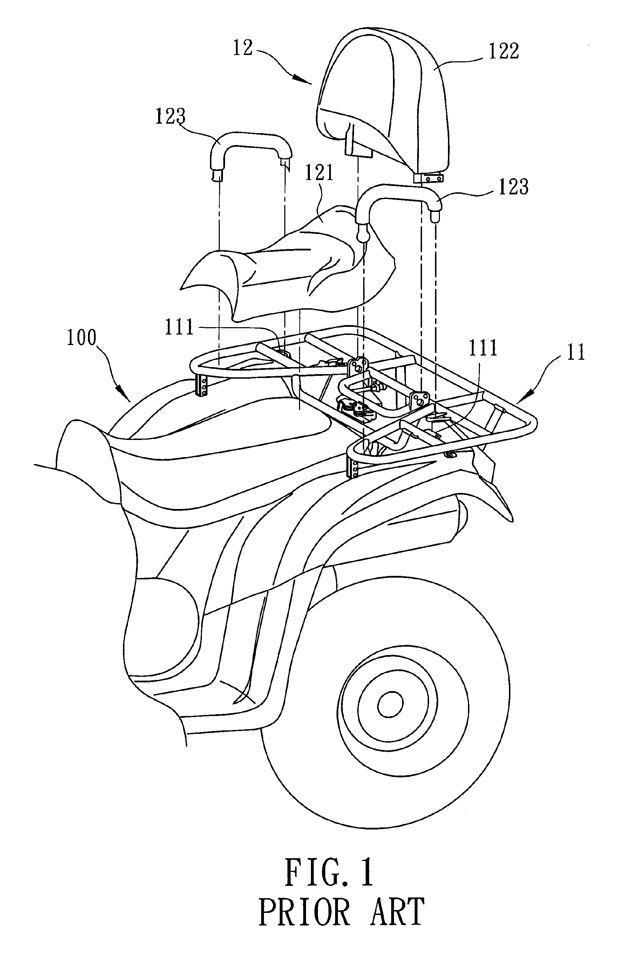

Referring to Figure 1, a conventional carrying device for a motorcycle 100 is shown to include: a supporting frame 11 secured to the motorcycle 100 and soldered with a plurality of fastening members 111 thereon; and a seating unit 12 having seat and back cushions 121, 122 and two handgrips 123. Each of the seat and back cushions 121, 122 and the handgrips 123 serves as an accessory and is fastened to corresponding fastening members 111 as desired using a plurality of connecting fasteners (not shown).

However, if there is no accessory to be mounted to the supporting frame 11, the exposed fastening members 111 may affect the overall appearance of the supporting frame 11. In this case, an additional cover (not shown) may be required to cover the fastening members 111. Otherwise, another supporting frame (not shown) without any fastening member 111 is used to replace the supporting frame 11, thereby resulting in higher costs and inconvenience.

Therefore, an object of the present invention is to provide a carrying device for a vehicle that can overcome the aforesaid drawbacks of the prior art.

According to the present invention, a carrying device for a vehicle comprises a supporting frame, at least one accessory, and a plurality of fastening units. The supporting frame is configured to be detachably mounted to the vehicle. The accessory is optionally disposed on the supporting frame. The fastening units are detachably connected to the supporting frame for fastening the accessory to the supporting frame when the accessory is disposed on the supporting frame.

Other features and advantages of the present invention will become apparent in the following detailed description of the preferred embodiment with reference to the accompanying drawings, of which:
Figure 1 is an exploded perspective view of a conventional carrying device for a motorcycle;
Figure 2 is a partly exploded perspective view showing the preferred embodiment of a carrying device for a vehicle according to the present invention;
Figure 3 is an exploded perspective view of a fastening unit of the preferred embodiment;
Figure 4 is a schematic sectional view illustrating the relationship between an accessory and a corresponding fastening unit of the preferred embodiment;
Figures 5a, 5b, and 5c are schematic top views illustrating the preferred embodiment when the accessories are located at different positions;
Figure 6 is a perspective view showing a modification of the preferred embodiment; and
Figure 7 is a schematic side view showing the modification of the preferred embodiment when mounted to a utility vehicle.

Before the present invention is described in greater detail, it should be noted that like elements are denoted by the same reference numerals throughout the disclosure.

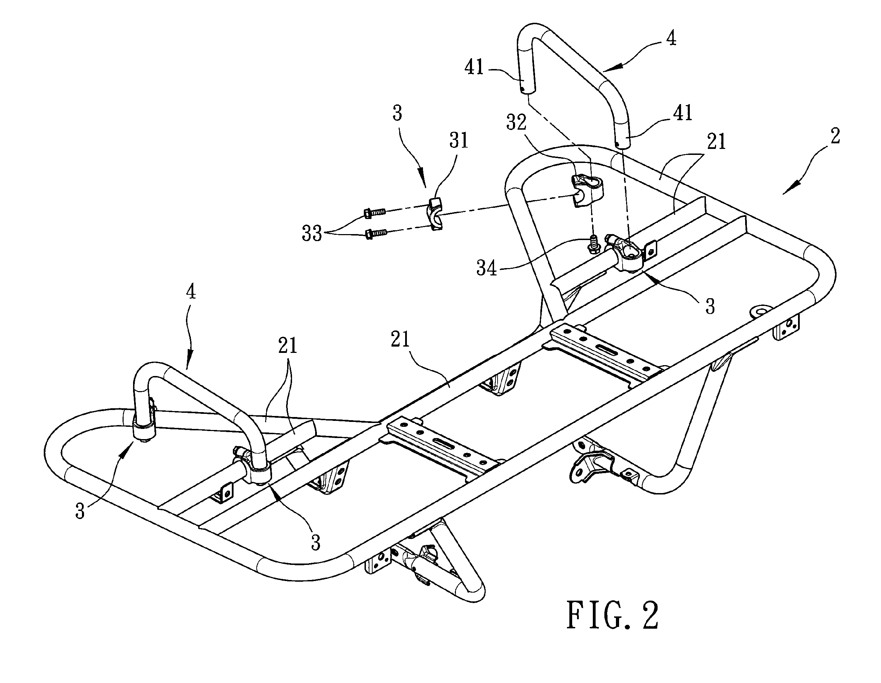

Referring to Figure 2, the preferred embodiment of a carrying device for a vehicle (not shown) according to the present invention is shown to include a supporting frame 2, two accessories 4, and a plurality of fastening units 3.

The supporting frame 2 is to be detachably mounted to the vehicle. In this embodiment, the supporting frame 2 includes a plurality of rod bodies 21 which are connected to each other.

The accessories 4 are optionally disposed on the supporting frame 2. In this embodiment, each of the accessories 4 is, but not limited to, a grip rod, and has opposite connecting ends 41.

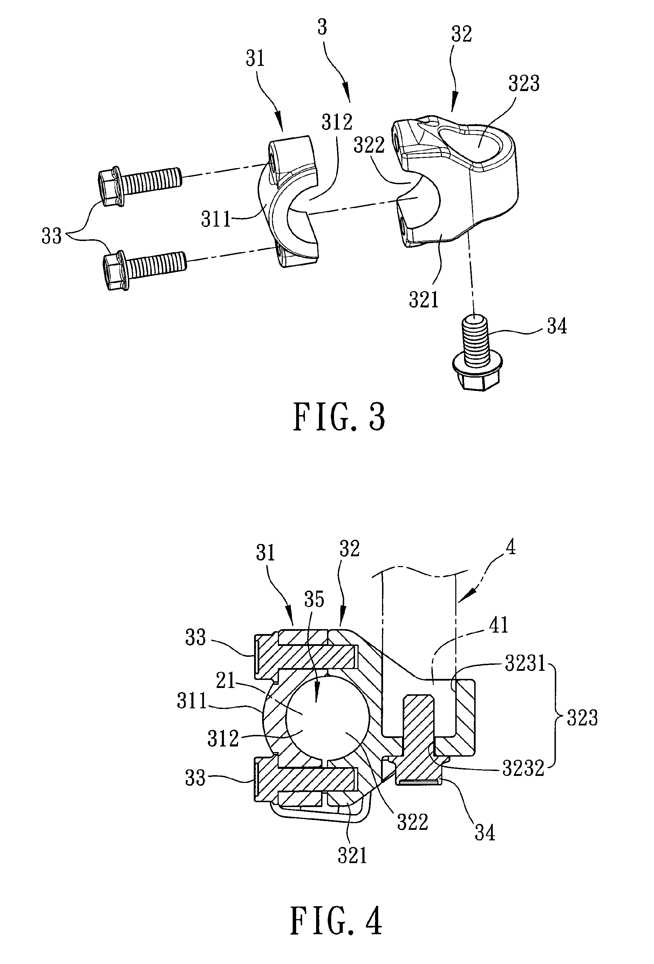

The fastening units 3 are detachably connected to the supporting frame 2 for fastening the accessories 4 to the supporting frame 2. The number of the fastening units 3 (for example, four in this embodiment) is associated with the number of the accessories 4 (for example, two in this embodiment). In this embodiment, each of the fastening units 3 is detachably sleeved on a corresponding one of the rod bodies 21 of the supporting frame 2. Referring further to Figures 3 and 4, each of the fastening units 3 includes first and second engaging members 31, 32, two first fastener members 33, and a second fastener member 34. For each of the fastening units 3, the first and second engaging members 31, 32 are attached to the corresponding rod body 21 of the supporting frame 2, and cooperate with each other to form a mounting hole 35 (see Figure 4) permitting extension of the corresponding rod body 21 of the supporting frame 2 therethrough. The first engaging member 31 has a first main body 311 formed with a semicircular first recess 312. The second engaging member 32 has a second main body 321 formed with a semicircular second recess 322 that cooperates with the first recess 312 in the first main body 311 of the first engaging member 31 to form the mounting hole 35. The first and second main bodies 311, 321 of the first and second engaging members 31, 32 are fastened to each other using the first fastener members 33, as shown in Figure 4. The second main body 321 of the second engaging member 32 is further formed with a through hole 323, which has a large-diameter hole portion 3231 permitting insertion of one of the connecting ends 41 of a corresponding accessory 4 thereinto, and a small-diameter hole portion 3232 permitting insertion of the second fastener member 34 therethrough. Thus, the second fastener member 34 is capable of extending into the large-diameter hole portion 3231 to detachably connect with said one of the connecting ends 41 of the corresponding accessory 4, thereby fastening said one of the connecting ends 41 of the corresponding accessory 4 to the fastening unit 3, as shown in Figure 4. As a result, said one of the connecting ends 41 of the corresponding accessory 4 is detachably connected to the corresponding rod body 21 of the supporting frame 2. In this embodiment, each of the first and second fastener members 33, 34 is a screw fastener.

During assembly of the fastening units 3 and the accessories 4, the first and second engaging members 31, 32 of each of the fastening units 3 are attached to the corresponding rod body 21, and then are connected, but not tightly fastened, to each other using the first fastener members 33 so as to be movable along the corresponding rod body 21 to a desired position. Thereafter, each connecting end 41 of each accessory 4 is inserted into the large-diameter hole portion 3231 of the through hole 323 in the second engaging member 32 of a corresponding fastening unit 3, and is rotatably connected to the second fastener member 34 of the corresponding fastening unit 3 so as to rotate a corresponding accessory 4 to a desired angular position. Finally, the first and second engaging members 31, 32 of each fastening unit 3 are tightly fastened to each other, and each connecting end 41 of each accessory 4 is tightly connected to the second fastener member 34 of the corresponding fastening unit 3.

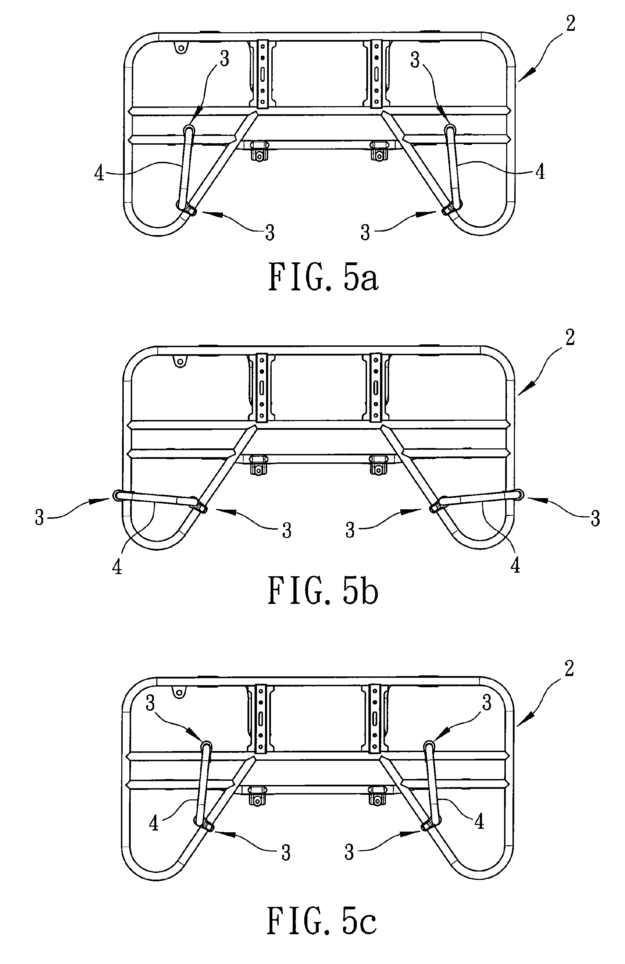

In use, the fastening units 3 are movable relative to the supporting frame 2 during assembly so that each accessory 4 can be located at respective desired positions, as shown in Figures 5a, 5b, and 5c.

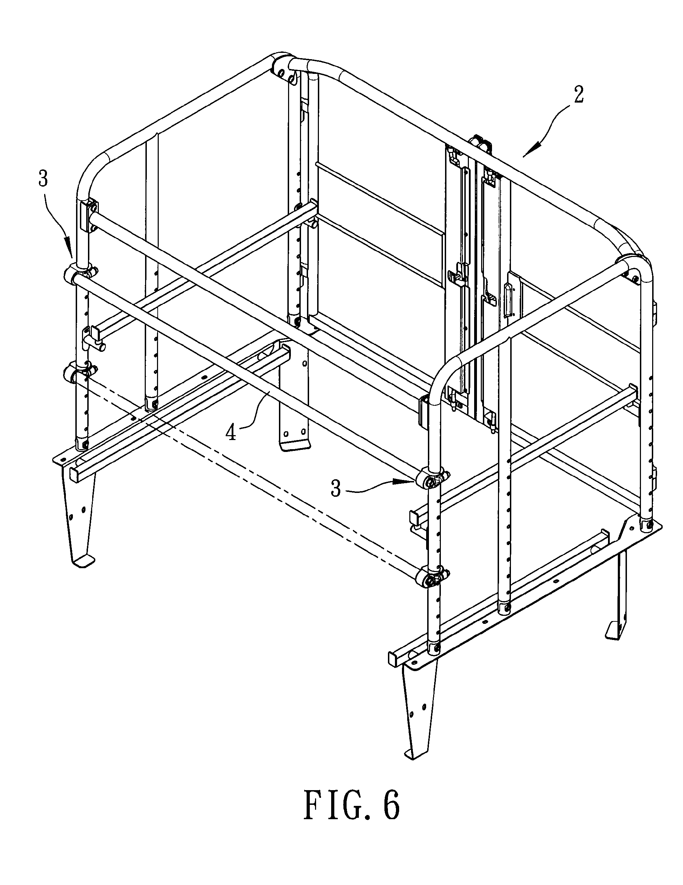

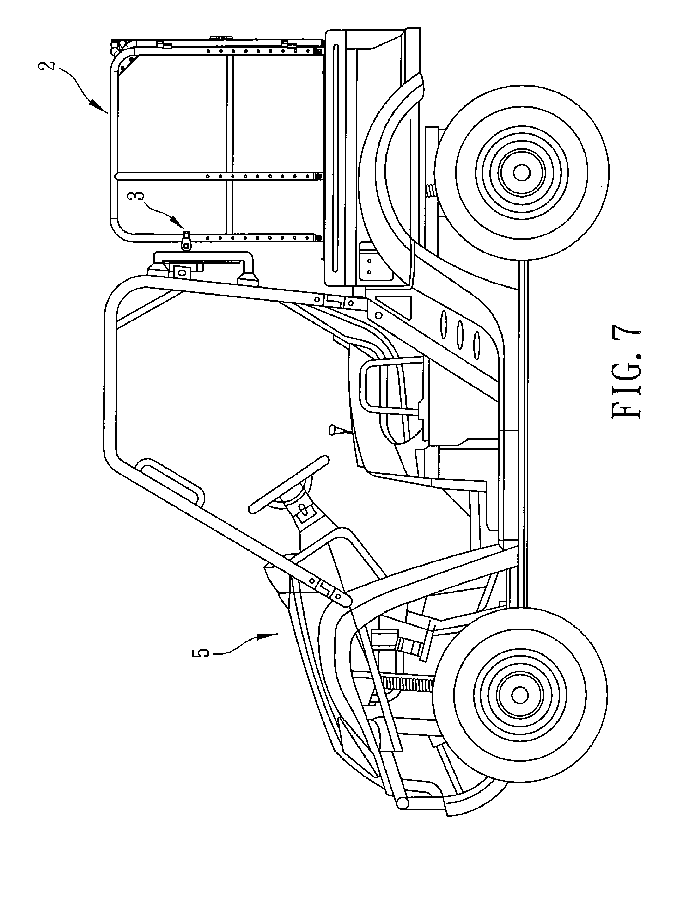

Figure 6 shows a modification of the carrying device of the preferred embodiment, wherein there is provided a single accessory 4, which is an auxiliary rod. Similarly, the location of the accessory 4 on the supporting frame 2 is adjustable. Figure 7 illustrates the carrying device of Figure 6 when mounted to a utility vehicle 5.

The following are some of the advantages attributed to the carrying device of the present invention:
1) Since each of the fastening units 3 can be detached from the supporting frame 2 when there is no accessory 4 to be mounted to the supporting frame 2, the overall appearance of the supporting frame 2 can be maintained.
2) The fastening units 3 are movable during assembly to comply with the location requirements of the various accessories 4. Therefore, the carrying device of the present invention can enhance compatibility between the fastening units 3 and the various accessories 4.
3) The components of each fastening unit 3 have relatively simple structures, and can be easily and quickly assembled or disassembled.

## Claims

1. A carrying device for a vehicle, **characterized by**:
a supporting frame(2) configured to be detachably mounted to the vehicle;
at least one accessory (4) optionally disposed on said supporting frame (2); and
a plurality of fastening units (3) detachably connected to said supporting frame (2) for fastening said accessory (4) to said supporting frame (2) when said accessory (4) is disposed on said supporting frame (2).

2. The carrying device as claimed in Claim 1, **characterized in that**:
said supporting frame (2) includes a plurality of rod bodies (21) which are connected to each other; and
eachofsaidfasteningunits (3) is detachably sleeved on a corresponding one of said rod bodies (21) of said supporting frame (2), and includes
first and second engaging members (31, 32) attached to the corresponding one of said rod bodies (21) of said supporting frame (2), and cooperating with each other to form a mounting hole (35) permitting extension of the corresponding one of said rod bodies (21) of said supporting frame (2) therethrough,
a plurality of first fastener members (33) for fastening said first and second engaging members (31, 32) to each other, and
a second fastener member (34) for fastening said accessory (4) to said second engaging member (32).

3. The carrying device as claimed in Claim 2, further **characterized in that**:
said first engaging member (31) of each of said fastening units (3) has a first main body (311) formed with a semicircular first recess (312);
said second engaging member (32) of each of said fastening units (3) has a second main body (321) formed with a semicircular second recess (322) that cooperates with said first recess (312) in said first main body (311) of said first engaging member (31) to form said mounting hole (35), said second main body (321) being further formed with a through hole (323) permitting insertion of said accessory (4) and said second fastener member (34) thereinto.

4. The carrying device as claimed in Claim 3, further **characterized in that** said through hole (323) in said second engaging member (32) of each of said fastening units (3) has a large-diameter hole portion (3231) permitting insertion of said accessory (4) thereinto, and a small-diameter hole portion (3232) permitting extension of said second fastener member (34) therethrough such that said second fastener member (34) is capable of extending into said large-diameter hole portion (3231) of said through hole (323).

5. The carrying device as claimed in Claim 4, further **characterized in that** said accessory (4) has at least one connecting end (41) capable of being inserted into said large-diameter hole portion (3231) of said through hole (323) in said second engaging member (32) of a corresponding one of said fastening units (3), and detachably connected to said second fastener member (34) of the corresponding one of said fastening units (3).

6. The carrying device as claimed in Claim 1, **characterized in that** said accessory (4) is a grip rod.

7. The carrying device as claimed in Claim 1, **characterized in that** said accessory (4) is an auxiliary rod.
